# EUROPEAN PATENT APPLICATION

(11) **EP 2 621 148 A1**
(43) Date of publication of application: **31.07.2013**
(21) Application number: 11826683.2
(22) Date of filing: 29.08.2011
(51) Int. Cl.: H04M 1/00, G01P 21/00, G06F 3/14, G09G 5/00

(54) **MOBILE TERMINAL AND DISPLAY CONTROL METHOD THEREFOR**

(30) Priority: 24.09.2010 JP 2010213925
(71) Applicant: NEC Corporation, Tokyo 108-8001 (JP)
(72) Inventor: TOMIMORI, Hiroyuki, Tokyo 108-8001 (JP)
(74) Representative: Vossius & Partner
(86) International application number: PCT/JP2011/069397
(87) International publication number: WO 2012/039237

(57) **Abstract**

The present invention is applied to a portable terminal having two housings that are foldably connected to each other. The portable terminal according to the present invention has two display units provided respectively on the two housings; an execution unit that executes an application on each of the two housings; a detection unit that is provided with one housing of the two housings and that detects data that represents the posture of the one housing; a correction value acquisition unit that corrects data that represent the posture of the one housing, in which the data is detected by the detection unit at the time when the other housing of the two housings is placed in a predetermined posture, to data detected on the assumption that the one housing is placed in the predetermined posture, and acquires the resultant correction value; and a correction unit that corrects the detection value detected by the detection unit using the correction value after the correction value is acquired and notifies the application that is being executed on the other housing of the corrected detection value.

## Description

### TECHNICAL FIELD

The present invention relates to a portable terminal having two housings that are foldably connected to each other and also to a display control method for the portable terminal.

### BACKGROUND ART

Some recent portable terminals include two-screen type terminals having two housings that are foldably connected to each other and that are provided with respective display screens (for example, refer to Patent Literature 1).

Some two-screen type terminals are provided with acceleration sensor that detects the postures of the housings. Applications that are being executed on such two-screen type terminals can perform processes based on the values of the acceleration sensor.

However, from a cost point of view, many two-screen type terminals may be provided with an acceleration sensor located on one of two housings.

Thus, when an application is executed on a two-screen type terminal based on the value of an acceleration sensor, the application needs to be executed on a housing that is provided with the acceleration sensor.

### RELATED ART LITERATURE

### PATENT LITERATURE

Patent Literature 1: JP2009-222951A, Publication

### SUMMARY OF THE INVENTION

### PROBLEM TO BE SOLVED BY THE INVENTION

However, two-screen type terminals can simultaneously operate respective applications on the two housings. Thus, two applications might be simultaneously executed based on the values of the acceleration sensors.

Thus, in the future, applications that are executed on a housing that is not provided with an acceleration sensor would need to perform processes based on a value detected by the acceleration sensor.

However, when such a two-screen type terminal is used under the existing circumstances, an application that is being executed on a housing that is not provided with an acceleration sensor cannot perform a process based on a value detected by the acceleration sensor unless the two housings are opened at a 180 degree angle.

Since two-screen type terminals are used in various manners depending on their users, if there is such a restriction in which a process cannot be performed based on a value detected by the acceleration sensor unless the two housings are opened at a 180 degree angle, the users can not conveniently use the terminals.

Therefore, an object of the present invention is to provide a portable terminal that can solve the foregoing problem and that allows an application that is being executed on a housing that is not provided with an acceleration sensor to perform a process based on a value detected by an acceleration sensor regardless of the open angle between the two housings and also to provide a display control method for the portable terminal.

### MEANS THAT SOLVE THE PROBLEM

A first portable terminal according to the present invention is a portable terminal having two housings that are foldably connected to each other, including:
two display units provided respectively on said two housings;
an execution unit that executes an application on each of said two housings;
a detection unit that is provided with one housing of said two housings and that detects data that represents the posture of the one housing;
a correction value acquisition unit that corrects data, that represent the posture of the one housing, in which the data is detected by said detection unit at the time when the other housing of said two housings is placed in a predetermined posture, to data detected on the assumption that the one housing is placed in said predetermined posture, and acquires the resultant correction value; and
a correction unit that corrects the detection value detected by said detection unit using said correction value after said correction value is acquired, and notifies the application that is being executed on the other housing of the corrected detection value.

A second portable terminal according to the present invention is a portable terminal having two housings that are foldably connected to each other, including:
two display units provided respectively on said two housings;
an execution unit that executes an application on each of said two housings;
a detection unit that is provided with one housing of said two housings and that detects data that represents the posture of the one housing;
a correction value acquisition unit that issues a message that causes the other housing of said two housings to be placed horizontally at a predetermined timing, corrects a detection value, detected by said detection unit at the time when a notification that denotes that the other housing was placed horizontally was received, to a detection value detected on the assumption that the one housing is placed horizontally, and acquires the resultant correction value; and
a correction unit that corrects the detection value detected by said detection unit using said correction value after said correction value is acquired and notifies the application that is being executed on the other housing of the corrected detection value.

A first display control method according to the present invention is a display control method for a portable terminal having two display means that are provided respectively on two housings that are foldably connected to each other, including:
providing a detection unit that is provided with one housing of said two housings and that detects data that represents the posture of the one housing;
correcting data that represent the posture of the one housing, in which the data is detected by said detection unit at the time when the other housing of said two housings is placed in a predetermined posture, to data detected on the assumption that the one housing is placed in said predetermined posture, and acquiring the resultant correction value; and
correcting the detection value detected by said detection unit using said correction value after said correction value is acquired and notifying the application that is being executed on the other housing of the corrected detection value.

A second display control method according to the present invention is a display control method for a portable terminal having two display means that are provided respectively on two housings that are foldably collected to each other, including:
providing a detection unit that is provided with one housing of said two housings and that detects data that represents the posture of the one housing;
issuing a message that causes the other housing of said two housings to be placed horizontally at a predetermined timing, correcting a detection value detected by said detection unit at the time when a notification that denotes that the other housing was placed horizontally was received to a detection value detected on the assumption that the one housing is placed horizontally, and acquiring the resultant correction value; and
correcting the detection value detected by said detection unit using said correction value after said correction value is acquired and notifying the application that is being executed on the other housing of the corrected detection value.

### EFFECT OF THE INVENTION

As an effect of the present invention, an application that is executed on a housing that is not provided with a detection unit that detects the posture of the housing can perform a process based on a detection value detected by the detection unit regardless of the open angle between the two housings.

### BRIEF DESCRIPTION OF DRAWINGS

Fig. 1 is an external view showing a portable terminal according to an embodiment of the present invention.
Fig. 2 is a functional block diagram of the portable terminal shown in Fig. 1.
Fig. 3 is a flow chart describing an operation of the portable terminal shown in Fig 1.
Fig. 4 is a schematic diagram describing a correction value acquisition process at step S6 shown in Fig. 3.

### BEST MODES THAT CARRY OUT THE INVENTION

Next, with reference to the accompanying drawings, an embodiment of the present invention will be described.

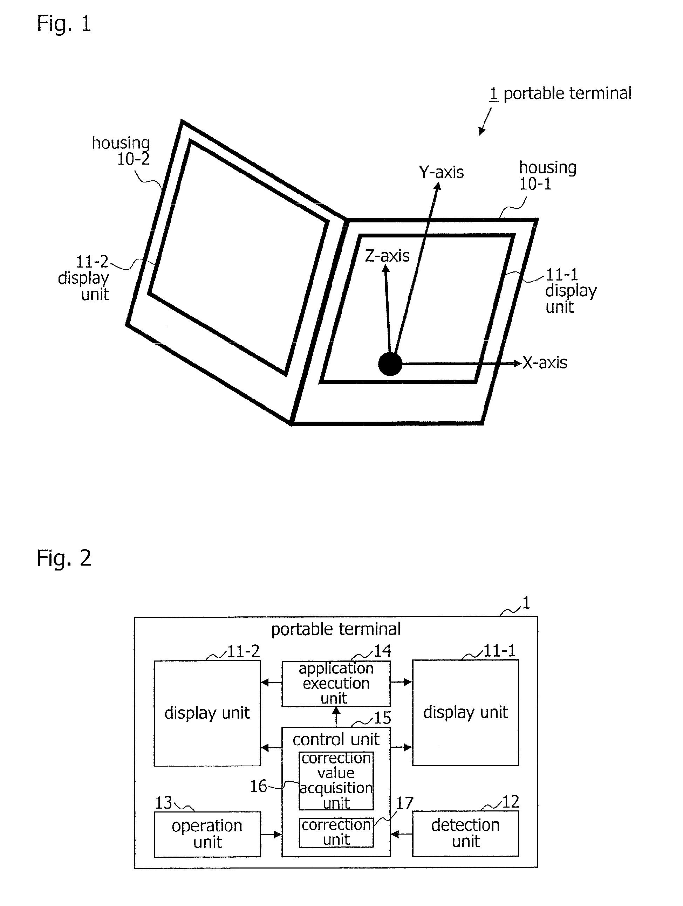

Fig. 1 is an external view showing portable terminal 1 according to an embodiment of the present invention.

Referring to Fig. 1, portable terminal 1 according to this embodiment is a two-screen type terminal having two housings 10-1 and 10-2 that are foldably connected by a hinge mechanism or the like.

Housing 10-1 is provided with display unit 11-1, whereas housing 10-2 is provided with display unit 11-2.

In this embodiment, it is assumed that detection unit 12 (refer to Fig. 2) is provided on housing 10-1. Detection unit 12 detects the accelerations in the directions of the X, Y, and Z axes of housing 10-1 so as to detect data that represent the posture of housing 10-1.

Fig. 2 is a functional block diagram of portable terminal 1 shown in Fig. 1.

Referring to Fig. 2, portable terminal 1 according to this embodiment has display units 11-1 and 11-2, detection unit 12, operation unit 13, application execution unit 14, and control unit 15.

Detection unit 12 is provided on housing 10-1 and is a three-axis acceleration sensor that detects the accelerations in the directions of the X, Y, and Z axes of housing 10-1.
Alternatively, detection unit 12 may be a six-axis sensor that includes a three-axis acceleration sensor and a three-axis magnetic field sensor.

Operation unit 13 is, for example, buttons provided on housings 10-1 and 10-2. However, according to this embodiment, touch panels may be provided on display screens of display units 11-1 and 11-2, respectively. In this structure, the touch panels are elements of operation unit 13.

Application execution unit 14 executes applications on the display screens of display units 11-1 and 11-2.

Control unit 15 controls the operation of portable terminal 1 and has correction value acquisition unit 16 and correction unit 17 that are characteristic structural elements of the present invention. In Fig. 2, other structural elements of control unit 15 are omitted.

Correction value acquisition unit 16 acquires a correction value for correcting a detection value (data), that represents the posture of housing 10-1 and that is detected by detection unit 12, to a detection value that represents the posture of housing 10-2.

Once correction value acquisition unit 16 acquires the correction value, correction unit 17 corrects the detection value detected by detection unit 12 using the acquired correction value and notifies an application that is executed on housing 10-2 of the corrected detection value.

Specific contents of the operation of correction value acquisition unit 16 will be described later.

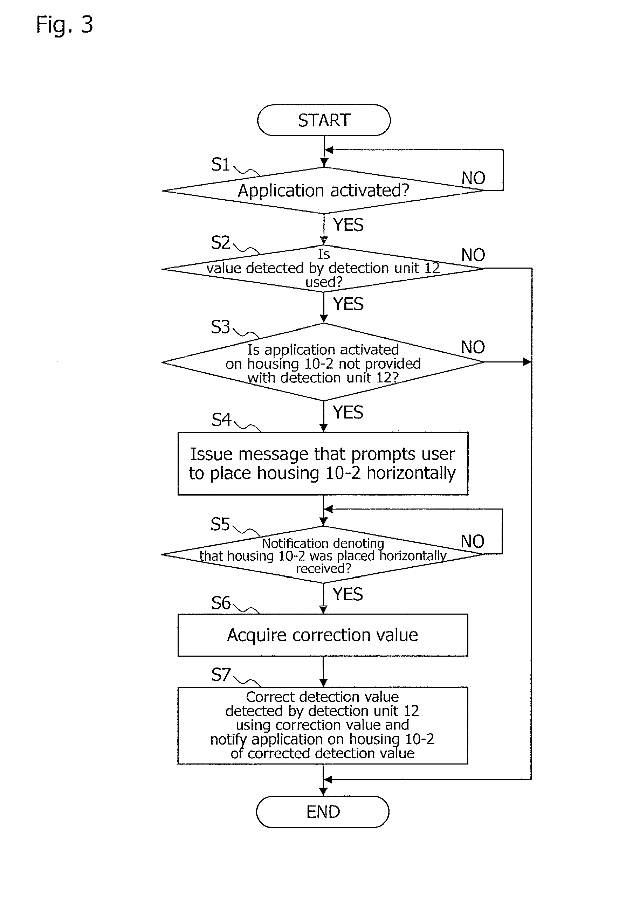

Next, with reference to Fig. 3, the operation of portable terminal 1 according to this embodiment will be described.

Referring to Fig. 3, when an application is activated (YES at step S1), if the application performs a process based on the detection value detected by detection unit 12 (YES at step S2) and if the application is activated on housing 10-2 that is not provided with detection unit 12 (YES at step S1), correction value acquisition unit 16 performs a process that acquires a correction value for correcting a detection value, that represents the posture of housing 10-1 and that is detected by detection unit 12, to a detection value that represents the posture of housing 10-2.

At this point, correction value acquisition unit 16 issues a message that prompts the user to place housing 10-2 horizontally (at step S4). In this context, placing housing 10-2 horizontally means that housing 10-2 is placed horizontally such that the display screen faces upward. As a specific example of the issue method, a message might be displayed as a visual message on display unit 11-1 or 11-2 or output as an audio message from a speaker (not shown).

Thereafter, correction value acquisition unit 16 determines whether or not it has received from the user a notification that denotes that housing 10-2 was placed horizontally (at step S5). This notification method may be instructed by correction value acquisition unit 16 at step S4. As a specific example of the notification method, buttons provided on housings 10-1 and 10-2 may be pressed. If touch panels are provided on the display screens of display units 11-1 and 11-2, buttons provided on the touch panels may be pressed.

When correction value acquisition unit 16 receives the foregoing notification from the user (YES at step S5), correction value acquisition unit 16 acquires a detection value detected by detection unit 12 at the time when correction value acquisition unit 16 received the notification.

At this point, since the posture of housing 10-2 is nearly horizontal, the posture of housing 10-2 can be represented by the detection value detected by detection unit 12 in the assumption that housing 10-1 is placed horizontally.

Thus, correction value acquisition unit 16 corrects the detection value, that was just detected by detection unit 12 at the time when correction value acquisition unit 16 received the notification from the user, to a detection value detected on the assumption that housing 10-1 is placed horizontally, and acquires the resultant correction value (at step S6). Thus, next, using the correction value, the detection value that represents the posture of housing 10-1 and that is detected by detection unit 12 can be corrected to a detection value that represents the posture of housing 10-2.

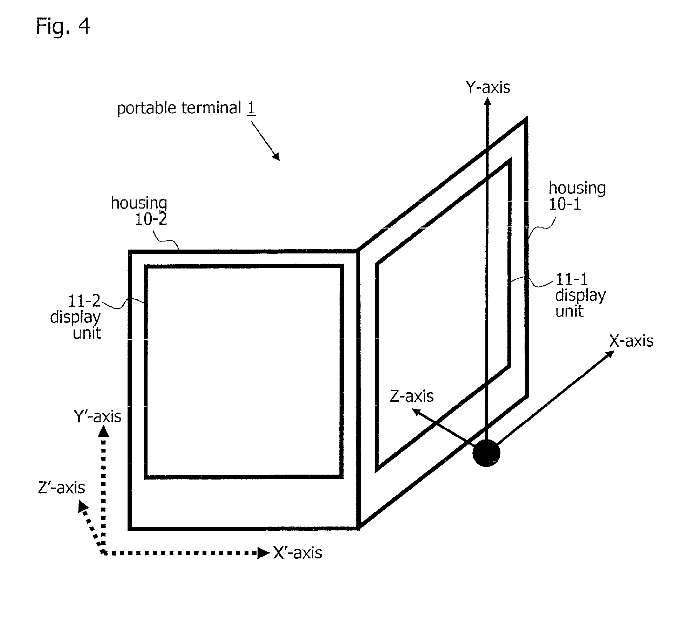

More specifically, referring to Fig. 4, when the posture of housing 10-2 is placed nearly horizontal, both the accelerations in the directions of the X' and Y' axes of housing 10-2 would be 0, whereas the acceleration in the direction of the Z' axis of housing 10-2 would be the same as the acceleration of gravity.

Thus, when correction value acquisition unit 16 receives the foregoing notification from the user, correction value acquisition unit 16 corrects the values of the accelerations in the directions of the X and Y axes of housing 10-1, the values being detected by detection unit 12, to 0, and corrects the value of the acceleration in the direction of the Z axis of housing 10-1 to the acceleration of gravity, and acquires the resultant correction value.

Once correction value acquisition unit 16 acquires the correction value, correction unit 17 corrects the detection value detected by detection unit 12 using the foregoing correction value and notifies the application that is being executed on housing 10-2 of the corrected detection value (at step S7).

Portable terminal 1 according to this embodiment is a two-screen type terminal having two housings 10-1 and 10-2 that are foldably connected to each other. As well, portable terminal 1 is expected to be used while the open angle between housings 10-1 and 10-2 is kept constant. Thus, next, the application that is being executed on housing 10-2 can perform a process based on the corrected detection value notified by correction unit 17.

As described above, according to this embodiment, when detection unit 12 is provided only on housing 10-1, a message is issued so as to prompt the user to place housing 10-2 horizontally. Thereafter, the detection value detected by detection unit 12 at the time when the notification that denotes that housing 10-2 was placed horizontally was received is corrected to a detection value detected on the assumption that housing 10-1 is placed horizontally. Next, the detection value detected by detection unit 12 is corrected using the correction value and the application that is being executed on housing 10-2 is notified of the corrected detection value.

Since the posture of housing 10-2 is nearly horizontal at the time when the foregoing notification is received, the posture of housing 10-2 can be represented by the detection value detected by detection unit 12 in the assumption that housing 10-1 is placed horizontally. Thus, next, the corrected detection value in which the detection value detected by detection unit 12 is corrected using the foregoing correction value can be assumed to represent the posture of housing 10-2.

Thus, regardless of the open angle between two housings 10-1 and 10-2, when the user places housing 10-2 horizontally and notifies the application that is being executed on housing 10-2 that housing 10-2 has been placed horizontally, the application that is being executed on housing 10-2 can perform a process based on the corrected detection value that represents the posture of housing 10-2.

Thus, as an effect of the present invention, an application that is being executed on housing 10-2 that is not provided with detection unit 12 can perform a process based on a detection value detected by detection unit 12 regardless of the open angle between two housings 10-1 and 10-2.

According to this embodiment, when the correction value is acquired, housing 10-2 is placed horizontally. However, it should be appreciated that the present invention is not limited to such a structure.

Alternatively, when housing 10-2 is placed in a predetermined posture, the detection value detected at the time may be corrected to a detection value detected on the assumption that housing 10-1 is placed in the predetermined posture so as to acquire the resultant correction value.

With reference to the embodiments, the present invention has been described. However, it should be understood by those skilled in the art that the structure and details of the present invention may be changed in various manners without departing from the scope of the present invention.

The present application claims a priority based on Japanese Patent Application JP 2010-213925 filed on September 24, 2010, the entire contents of which are incorporated herein by reference in its entirety.

## Claims

1. A portable terminal having two housings that are foldably connected to each other, comprising:
two display units provided respectively on said two housings;
an execution unit that executes an application on each of said two housings;
a detection unit that is provided with one housing of said two housings and that detects data that represents the posture of the one housing;
a correction value acquisition unit that corrects data that represent the posture of the one housing, in which the data is detected by said detection unit at the time when the other housing of said two housings is placed in a predetermined posture, to data detected on the assumption that the one housing is placed in said predetermined posture, and acquires the resultant correction value; and
a correction unit that corrects the detection value detected by said detection unit using said correction value after said correction value is acquired, and notifies the application that is being executed on the other housing of the corrected detection value.

2. A portable terminal having two housings that are foldably connected to each other, comprising:
two display units provided respectively on said two housings;
an execution unit that executes an application on each of said two housings;
a detection unit that is provided with one housing of said two housings and that detects data that represents the posture of the one housing;
a correction value acquisition unit that issues a message that causes the other housing of said two housings to be placed horizontally at a predetermined timing, corrects a detection value, detected by said detection unit at the time when a notification that denotes that the other housing was placed horizontally was received, to a detection value detected on the assumption that the one housing is placed horizontally, and acquires the resultant correction value; and
a correction unit that corrects the detection value detected by said detection unit using said correction value after said correction value is acquired and notifies the application that is being executed on the other housing of the corrected detection value.

3. The portable terminal as set forth in claim 2,
wherein said predetermined timing is a timing at which the application that performs the process based on the detection value detected by said detection unit is activated on the other housing.

4. The portable terminal as set forth in claim 2 or 3,
wherein said detection unit includes a three-axis acceleration sensor that detects accelerations in the directions of X axis, Y axis, and Z axis of the one housing, and
wherein said correction value acquisition unit corrects the values of the accelerations in the directions of the X axis and Y axis of the one housing, in which the values are detected at the time when said notification is received, at said predetermined timing, to 0, corrects the value of the acceleration in the direction of the Z axis of the one housing to the acceleration of gravity, and acquires the resultant correction value.

5. A display control method for a portable terminal having two display means that are provided respectively on two housings that are foldably connected to each other, including:
providing a detection unit that is provided with one housing of said two housings and that detects data that represents the posture of the one housing;
correcting data that represent the posture of the one housing, in which the data is detected by said detection unit at the time when the other housing of said two housings is placed in a predetermined posture, to data detected on the assumption that the one housing is placed in said predetermined posture, and acquiring the resultant correction value; and
correcting the detection value detected by said detection unit using said correction value after said correction value is acquired and notifying the application that is being executed on the other housing of the corrected detection value.

6. A display control method for a portable terminal having two display means that are provided respectively on two housings that are foldably connected to each other, including:
providing a detection unit that is provided with one housing of said two housings and that detects data that represents the posture of the one housing;
issuing a message that causes the other housing of said two housings to be placed horizontally at a predetermined timing, correcting a detection value detected by said detection unit at the time when a notification that denotes that the other housing was placed horizontally was received to a detection value detected on the assumption that the one housing is placed horizontally, and acquiring the resultant correction value; and
correcting the detection value detected by said detection unit using said correction value after said correction value is acquired and notifying the application that is being executed on the other housing of the corrected detection value.
